# EUROPEAN PATENT APPLICATION

(11) **EP 3 051 398 A1**
(43) Date of publication of application: **03.08.2016**
(21) Application number: 14797469.5
(22) Date of filing: 21.04.2014
(51) Int. Cl.: G06F 3/048

(54) **TERMINAL SCREENSHOT METHOD AND DEVICE**

(30) Priority: 04.11.2013 CN 201310536082
(71) Applicant: ZTE Corporation, Shenzhen, Guangdong 518057 (CN)
(72) Inventor: YE, Mingji, Shenzhen Guangdong 518057 (CN)
(74) Representative: Schröer, Gernot H.
(86) International application number: PCT/CN2014/075769
(87) International publication number: WO 2014/183537

(57) **Abstract**

A terminal screenshot method and device are disclosed, and particularly relate to the terminal application field. The method includes: capturing a content currently displayed on a screen of a terminal to obtain a first picture; moving the content displayed on the screen, and capturing other pictures except the content currently displayed on the screen in turn; and performing connection processing on the first picture and other pictures in turn to obtain a complete screenshot comprising the first picture and other pictures which are connected with each other. The embodiments of the present invention enable a user to conveniently complete a picture capturing operation on an entirely or partially scrolling window by way of automatically scrolling a screen or sliding a touch screen using a finger, thereby satisfying the individualized requirement of the user on capturing contents.

## Description

### Technical Field

The present invention relates to the terminal application field, and in particular, to a terminal screenshot method and related device.

### Background of the Related Art

The current mobile phone has become an indispensable tool for people every day, and the screenshot function is often used by the mobile phone users. Most of the current mobile phones of the users are smart phones, and the mobile phones can take screenshots by way of traditional key combination; but all the current screenshot modes can only capture the content displayed on the current screen, for the screen pages, such as, webpage, microblogging, etc., one screen cannot display all contents, and further the traditional screenshot mode cannot capture all contents of the screen page.

Currently, for most of the mobile phones, there is no function of capturing a scrolling screen, which greatly limits the effect of the screenshot and thus it is difficult for the traditional screenshot function to meet the needs of the current user.

### Summary of the Invention

The object of the present invention is to provide a terminal screenshot method and device, which can solve the problem that the terminal user cannot capture the scrolling window by using the traditional picture capturing mode.

According to one aspect of the present invention, a terminal screenshot method is provided, comprising:
capturing a content currently displayed on a screen of a terminal to obtain a first picture;
moving the content displayed on the screen, and capturing other pictures except the content currently displayed on the screen in turn; and
performing connection processing on the first picture and the other pictures in turn to obtain a complete screenshot comprising the first picture and other pictures which are connected with each other.

Preferably, the step of moving the content displayed on the screen, and capturing other pictures except the content currently displayed on the screen in turn comprises:
scrolling a screen page according to a preset pixel height, and obtaining another display content whose height is equal to the preset pixel height; and
capturing the other display content whose height is equal to the preset pixel height, to obtain another picture.

Preferably, the step of moving the content displayed on the screen, and capturing other pictures except the content currently displayed on the screen in turn further comprises:
when a screen page cannot be scrolled in accordance with the preset pixel height, capturing a content displayed on the screen after actually scrolling; and
selecting lower part of a display content whose pixel height is equal to an actual scrolling height in the content displayed on the screen captured after actually scrolling as a final picture of the other pictures.

Preferably, the preset pixel height is a pixel height of the screen.

Preferably, the step of moving the content displayed on the screen, and capturing other pictures except the content currently displayed on the screen in turn comprises:
scrolling a screen page based on detecting a screen sliding operation;
capturing a content displayed on the screen after scrolling; and
selecting lower part of a display content whose pixel height is equal to a sliding height in the content displayed on the screen captured after scrolling as the other picture.

Preferably, the sliding height is obtained by detecting a sliding distance of a screen sliding operation.

According to another aspect of the present invention, a terminal screenshot device is provided, comprising:
a first-picture capturing module, configured to: capture a content currently displayed on a screen of a terminal to obtain a first picture;
an other-picture capturing module, configured to: move the content displayed on the screen, and capture other pictures except the content currently displayed on the screen in turn; and
a picture connection module, configured to: perform connection processing on the first picture and the other pictures in turn to obtain a complete screenshot comprising the first picture and other pictures which are connected with each other.

Preferably, the other-picture capturing module comprises:
a display content obtaining submodule, configured to: scroll a screen page according to a preset pixel height, and obtain another display content whose height is equal to the preset pixel height; and
a display content capturing submodule, configured to: capture the other display content whose height is equal to the preset pixel height, to obtain another picture.

Preferably, the display content capturing submodule is further configured to: when a screen page cannot be scrolled in accordance with the preset pixel height, capture a content displayed on the screen after actually scrolling; and select lower part of a display content whose pixel height is equal to an actual scrolling height in the content displayed on the screen captured after actually scrolling as a final picture of the other pictures.

Preferably, the other-picture capturing module comprises:
a screen page scrolling submodule, configured to: scroll a screen page based on detecting a screen sliding operation;
a screen page capturing submodule, configured to: capture a content displayed on the screen after scrolling, and select lower part of a display content whose pixel height is equal to a sliding height in the content displayed on the screen captured after scrolling as the other picture.

Compared with the related art, the embodiments of the present invention have the beneficial effects as follows:
the embodiments of the present invention enable the user to conveniently complete a picture capturing operation of the scrolling window and meets the individualized requirement of the user on capturing contents.

### Brief Description of Drawings

FIG. 1 is a function block diagram of a terminal screenshot method provided by an embodiment of the present invention;
FIG. 2 is a block diagram of a terminal screenshot device provided by an embodiment of the present invention;
FIG. 3 is an overall structure diagram of a mobile phone screenshot provided by an embodiment of the present invention;
FIG. 4 is a working flow chart of a mobile phone screenshot provided by an embodiment of the present invention;

### Preferred Embodiments of the Invention

The preferred embodiments of the present invention are described in detail with reference to the accompanying drawings hereinafter. It should be understood that, the embodiments illustrated hereinafter are used to describe and explain the present invention, rather than limit the present invention.

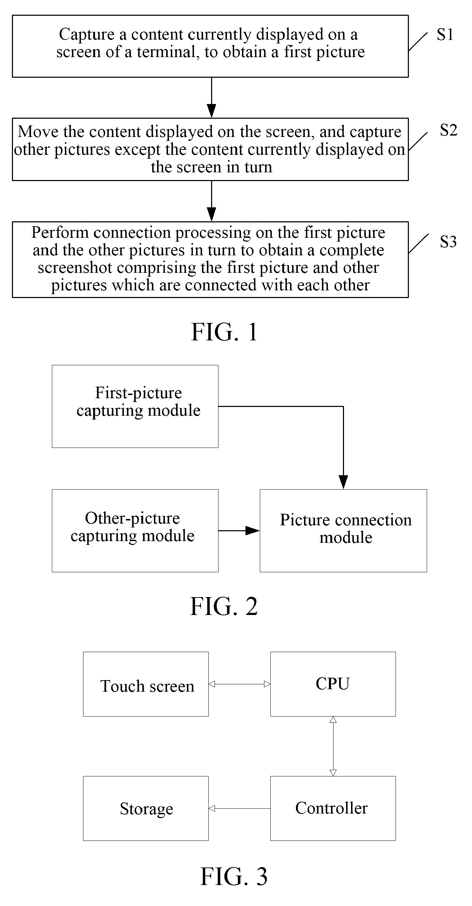

FIG. 1 is a function block diagram of a terminal screenshot method provided by an embodiment of the present invention; as shown in FIG. 1, the specific steps are as follows:
in step S1, a content currently displayed on a screen of a terminal is captured to obtain a first picture;
in step S2, the content displayed on the screen is moved, and other pictures except the content currently displayed on the screen are captured in turn;
the step S2 can be achieved by an automatic picture capturing mode, and can also be achieved through a manual picture capturing mode.

In the case of selecting the automatic picture capturing mode, the step S2 includes: scrolling a screen page according to a preset pixel height, and obtaining another display content whose height is equal to the preset pixel height; and capturing the other display content whose height is equal to the preset pixel height, to obtain another picture. Further, the step S2 further includes:
capturing a content displayed on the screen after actual scrolling when the screen page cannot be scrolled in accordance with the preset pixel height; and then selecting lower part of the display content, whose pixel height is equal to an actual scrolling height in the content displayed on the screen captured after actually scrolling as a final picture of the other pictures. For example, when the screen page is already scrolled to the bottom, the actual scrolling height is less than the preset pixel height, the display content of the final screen include the display contents captured before, at this time, the final picture should be the lower part of the display content whose pixel height is equal to the actual scrolling height. The above preset pixel height can be the pixel height of the screen.

In the case of selecting the manual picture capturing mode, the step S2 includes: scrolling a screen page based on detecting a screen sliding operation; and capturing a content displayed on the screen after the scrolling; and then selecting lower part of a display content whose pixel height is equal to a sliding height in the content displayed on the screen captured after scrolling as the other picture. Wherein, it is started to capture the content displayed on the screen after scrolling when it is detected that the screen sliding operation is stopped. The sliding height is obtained by detecting the sliding distance of the screen slide operation (i.e., the pixel height of the screen slide operation).

In step S3, connection processing is performed on the first picture and the other pictures in turn to obtain a complete screenshot comprising the first picture and other pictures which are connected with each other.

FIG. 2 is a block diagram of a terminal screenshot device provided by an embodiment of the present invention; as shown in FIG. 2, it includes a first-picture capturing module, an other-picture capturing module and a picture connection module; wherein,
the first-picture capturing module is used for capturing a content currently displayed on a screen of a terminal to obtain a first picture;
the other-picture capturing module is used for moving the content displayed on the screen, and capturing other pictures except the content currently displayed on the screen in turn; and the other-picture capturing module can achieve automatic picture capturing, and can also achieve manual picture capturing. When automatically capturing the picture, the display content obtaining submodule of the other-picture capturing module scrolls the screen page according to the preset pixel height, and obtains another display content whose height is equal to the preset pixel height; the display content capturing submodule of the other-picture capturing module captures the other display content whose height is equal to the preset pixel height, to obtain the other picture. For the situation that the actual scrolling height is less than the preset pixel height because the screen page has been already scrolled to the bottom, etc., the display content of the screen already includes the display contents captured before; in that time, the final picture should be the lower part of the display content whose pixel height is the actual scrolling height, that is, the display content capturing submodule captures the content displayed on the screen after actually scrolling when the screen page cannot be scrolled in accordance with the preset pixel height; and selects the lower part of the display content whose pixel height is equal to an actual scrolling height in the content displayed on the screen captured after actually scrolling as the final picture of the other pictures. The above preset pixel height is the pixel height of the screen. When manually capturing the picture, the screen page scrolling submodule of the other-picture capturing module scrolls the screen page based on detecting a screen sliding operation, and then the screen page capturing submodule of the other-picture capturing module captures the content displayed on the screen after scrolling, and selects the lower part of the display content whose pixel height is equal to the sliding height in the content displayed on the screen captured after scrolling as the other picture. Wherein, the screen page scrolling submodule stops scrolling the page when detecting that the screen slide operation is stopped, and the screen page capturing submodule starts to capture the content displayed on the screen after scrolling. The screen page scrolling submodule obtains the sliding height by detecting the sliding distance of the screen slide operation (i.e., the pixel height of the screen slide operation).

The picture connection module is used for performing the connection processing on the first picture and the other pictures in turn to obtain a complete screenshot comprising the first picture and other pictures which are connected with each other.

The above terminal can be a mobile phone, and also can be a tablet PC and another terminal; it is further explained by taking the mobile phone as an example.

FIG. 3 is an overall structure diagram of a mobile phone screenshot provided by an embodiment of the present invention, as shown in FIG. 3, including: a touch screen, a CPU, a controller and a storage installed in the mobile phone body, wherein, the touch screen is a multi-touch screen, connected with the CPU. The present embodiment achieves the functions of the first-picture capturing module, the other-picture capturing module and the picture connection module through the CPU and the controller, to complete the mobile phone screenshot. Specifically, the CPU makes the mobile phone capture the content currently displayed on the screen of the terminal through the controller to obtain the first picture, and then controls the mobile phone to move the content displayed on the screen, captures other pictures except the content currently displayed on the screen in turn, and finally performs the connection processing on the first picture and the other pictures in turn, to obtain a complete screenshot including the first picture and other pictures which are connected with each other.

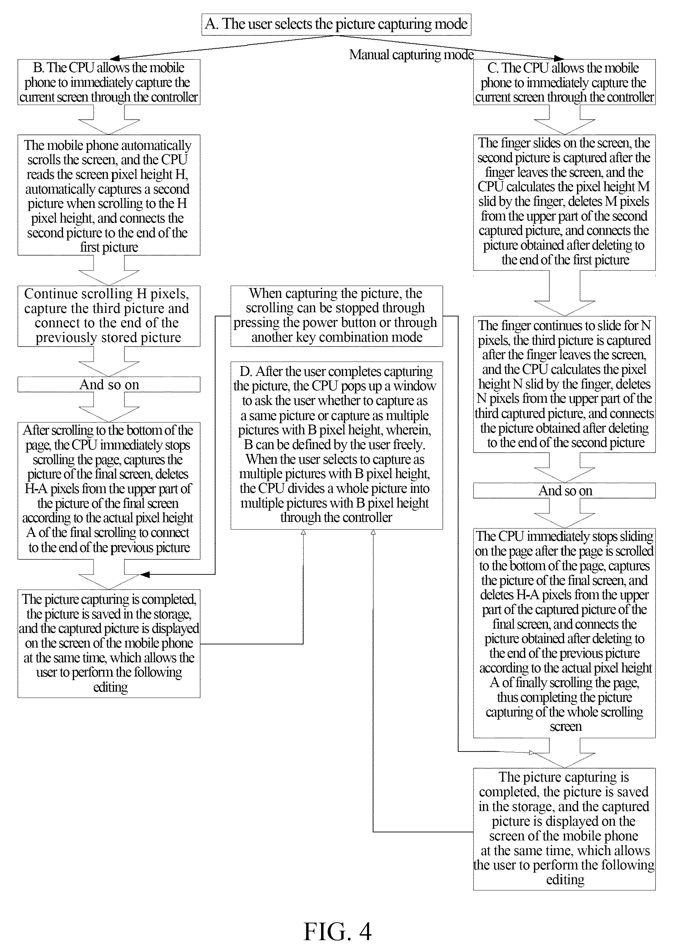

In the present embodiment, the mobile phone screenshot is provided with two modes; one is the automatic picture capturing mode, and one is the manual picture capturing mode; while the specific procedure is further explained through the embodiment of FIG.4.

FIG. 4 is a working flow chart of a mobile phone screenshot provided by an embodiment of the present invention, as shown in FIG. 4, includes the following steps:
in step A, the user can start a picture capturing function through a key combination or long pressing the button by a finger, and in that time, a pop-up window allows the user to select the automatic picture capturing or the manual picture capturing. When the user selects the automatic picture capturing mode, the step B is executed; when the user selects the manually picture capturing mode, the step C is executed.

In step B, when the user selects the automatic picture capturing mode, the CPU allows the mobile phone to immediately capture the content currently displayed on the screen through the controller, to obtain the first picture. And then it controls the mobile phone to automatically scroll the screen, and the CPU reads the screen pixel height H, automatically captures a second picture when scrolling to the H pixel height, and connects the second picture to the end of the first picture. Then it is to continue scrolling H pixels, capture the third picture and connect to the end of the previously stored picture; and so on, until it is to scroll to the bottom of the page. After scrolling to the bottom of the page, the CPU immediately stops scrolling the page, captures the display content of the final screen, deletes (H-A) pixel height from the upper part of the final captured picture according to the actual pixel height A of the final scrolling, and connects the picture obtained after deleting to the end of the previous picture; in other words, a picture with A pixel height at the lower part of the captured picture of the final screen is selected as the final picture and connected to end of the previous picture, thus completing the automatic picture capturing of the entire scrolling screen. During the picture capturing process, the user can stop scrolling the screen page by pressing the power button or through other key combination mode. After the picture capturing is completed, the picture is saved in the storage, and the captured picture is displayed on the screen of the mobile phone at the same time, which allows the user to perform following effect editing, such as, cutting, modifying, scaling, etc., through a built-in photo editor.

In step C, when the user selects the manual picture capturing mode, the CPU allows the mobile phone to immediately capture the content currently displayed on the screen through the controller, to obtain the first picture. And then the finger slides on the screen, the content displayed on the screen is captured after the finger leaves the screen, and the CPU calculates the pixel height M slid by the finger, deletes (H-M) pixel height from the upper part of the captured content displayed on the screen, selects the picture obtained after deleting as the second picture, and connects the second picture to the end of the first picture; in other words, the second picture is a display content with M pixel height at the lower part of the captured content displayed on the screen. The finger continues to slide for N pixels, the content displayed on the screen is captured after the finger leaves the screen, and the CPU calculates the pixel height N slid by the finger, deletes (H-N) pixel height from the upper part of the captured content displayed on the screen, selects the picture obtained after deleting as the third picture, and connects the third picture to the end of the second picture; in other words, the third picture is a display content with N pixel height at the lower part of the captured content displayed on the screen, and so on, until it reaches the bottom of the page. The CPU immediately stops sliding on the page after it is to scroll to the bottom of the page, captures the content displayed on the final screen, and according to the actual pixel height A for finally scrolling the page, deletes (H-A) pixel height from the upper part of the captured display content of the final screen, selects the picture obtained after deleting as the final picture, and connects the final picture to the previous picture, thus completing the manual picture capturing of the whole scrolling screen. When the user wants to stop capturing the picture if it is not to slide to the end of the page yet, it is just required to stop capturing the picture by pressing the power button or through another key combination mode. After the picture capturing is completed, a complete screenshot is saved in the storage, and the complete screenshot is displayed on the screen of the mobile phone at the same time, which allows the user to perform following effect editing, such as, cutting, modifying, scaling, etc., through a built-in photo editor.

In step D, after the user completes capturing the picture, the CPU pops up a window to ask the user whether to capture as a same picture or capture as multiple pictures with B pixel height, wherein, B can be defined by the user freely. When the user selects to capture as multiple pictures with B pixel height, the CPU divides a whole picture into multiple pictures with B pixel height through the controller. In other words, a whole picture can be divided into pictures with any pixel height and saved according to the requirement of the user.

In the embodiments of FIG. 3 and FIG. 4, the size of the provided mobile phone is completely consistent with that of the normal phone, and user does not need to change the existing habits when using it, which is simply and conveniently to use and improves the user experience.

Although the above text describes the present invention in detail, the present invention is not limited thereto. Those skilled in the art can make various modifications according to the principles of the present invention. Therefore, and all the modifications made according to the principles of the present invention should be understood to be embodied in the protection scope of the present invention.

### Industrial Applicability

In summary, the embodiment of the present invention has the following technical effects:
in the embodiment of the present invention, through the mode of automatically scrolling the screen page or scrolling the screen via a finger sliding a touch screen, the terminal solves the problem that the user cannot capture the scrolling screen page by using the traditional picture capturing mode, achieves the objective of rapidly capturing the whole or partial scrolling window, which is greatly convenient for users to use, and meets the individualized requirement of user on a picture capturing operation of the terminal.

## Claims

1. A terminal screenshot method, comprising:
capturing a content currently displayed on a screen of a terminal to obtain a first picture;
moving the content displayed on the screen, and capturing other pictures except the content currently displayed on the screen in turn; and
performing connection processing on the first picture and the other pictures in turn to obtain a complete screenshot comprising the first picture and other pictures which are connected with each other.

2. The method according to claim 1, wherein, the step of moving the content displayed on the screen and capturing other pictures except the content currently displayed on the screen in turn comprises:
scrolling a screen page according to a preset pixel height, and obtaining another display content whose height is equal to the preset pixel height; and
capturing the other display content whose height is equal to the preset pixel height, to obtain another picture.

3. The method according to claim 2, wherein, the step of moving the content displayed on the screen and capturing other pictures except the content currently displayed on the screen in turn further comprises:
when a screen page cannot be scrolled in accordance with the preset pixel height, capturing a content displayed on the screen after actually scrolling; and
selecting lower part of a display content whose pixel height is equal to an actual scrolling height in the content displayed on the screen captured after actually scrolling as a final picture of the other pictures.

4. The method according to claim 2 or 3, wherein, the preset pixel height is a pixel height of the screen.

5. The method according to claim 1, wherein, the step of moving the content displayed on the screen and capturing other pictures except the content currently displayed on the screen in turn comprises:
scrolling a screen page based on detecting a screen sliding operation;
capturing a content displayed on the screen after scrolling; and
selecting lower part of a display content whose pixel height is equal to a sliding height in the content displayed on the screen captured after scrolling as the other picture.

6. The method according to claim 5, wherein, the sliding height is obtained by detecting a sliding distance of a screen sliding operation.

7. A terminal screenshot device, comprising:
a first-picture capturing module, configured to: capture a content currently displayed on a screen of a terminal to obtain a first picture;
an other-picture capturing module, configured to: move the content displayed on the screen, and capture other pictures except the content currently displayed on the screen in turn; and
a picture connection module, configured to: perform connection processing on the first picture and the other pictures in turn to obtain a complete screenshot comprising the first picture and other pictures which are connected with each other.

8. The device according to claim 7, wherein the other-picture capturing module comprises:
a display content obtaining submodule, configured to: scroll a screen page according to a preset pixel height, and obtain another display content whose height is equal to the preset pixel height; and
a display content capturing submodule, configured to: capture the other display content whose height is equal to the preset pixel height, to obtain another picture.

9. The device according to claim 8, wherein the display content capturing submodule is further configured to: when a screen page cannot be scrolled in accordance with the preset pixel height, capture a content displayed on the screen after actually scrolling; and select lower part of a display content whose pixel height is equal to an actual scrolling height in the content displayed on the screen captured after actually scrolling as a final picture of the other pictures.

10. The device according to claim 7, wherein the other-picture capturing module comprises:
a screen page scrolling submodule, configured to: scroll a screen page based on detecting a screen sliding operation; and
a screen page capturing submodule, configured to: capture a content displayed on the screen after scrolling, and select lower part of a display content whose pixel height is equal to a sliding height in the content displayed on the screen captured after scrolling as the other picture.
